# Europäisches Patentamt

## European Patent Office

## Office européen des brevets

(11) Veröffentlichungsnummer: **0 254 330**

**A1**

(12) **EUROPÄISCHE PATENTANMELDUNG**

(21) Anmeldenummer: 87200794.3

(22) Anmeldetag: 28.04.87

(51) Int. Cl.⁴: **C04B 7/04 , C01B 17/50**

(30) Priorität: 05.07.86 DE 3622688

(43) Veröffentlichungstag der Anmeldung:
27.01.88 Patentblatt 88/04

(84) Benannte Vertragsstaaten:
AT BE CH DE ES FR GB GR IT LI LU NL SE

(71) Anmelder: METALLGESELLSCHAFT AG
Reuterweg 14 Postfach 3724
D-6000 Frankfurt/M.1(DE)

(72) Erfinder: Kühle, Karlheinz, Dr.
Strassheimer Weg 69
D-6365 Rosbach(DE)
Erfinder: Knösel, Klaus-Rüdiger
Mathias-Claudius Strasse 6
D-6000 Frankfurt am Main 50(DE)

(74) Vertreter: Rieger, Harald, Dr.
Reuterweg 14
D-6000 Frankfurt a.M.(DE)

(54) Verfahren zur Herstellung von Zementklinker und SO2-haltigen Abgasen.

(57) Zur Herstellung von Zementklinker und $SO_2$-reichen Abgasen aus Kalziumsulfat-haltigen Ausgangsstoffen wird ein Verfahren vorgeschlagen, bei dem die Abspaltung des $SO_2$ aus dem Kalziumsulfat in einem aus Wirbelschichtreaktor, Abscheider und Rückführleitung bestehenden Zirkulationssystem durchgeführt wird, während für das Brennen des Zementklinkers ein gesonderter Brennofen verwendet wird. Auf diese Weise ist es möglich, die Abgasströme getrennt zu halten und einerseits aus dem Zirkulationssystem ein Abgas mit etwa 20 % $SO_2$ für die Schwefelsäureherstellung zu erhalten und andererseits aus dem Brennofen ein im wesentlichen $SO_2$-freies Abgas, das in üblicher Weise zur Trocknung und Vorwärmung der Rohmaterialien verwendet werden kann.

In Verbindung mit weiteren Wärmerückgewinnungsmaßnahmen wird damit ein wirtschaftliches Verfahren zur Herstellung von Schwefelsäure und Zementklinker aus Kalziumsulfat-haltigen Ausgangsstoffen vorgeschlagen, das insbesondere im Hinblick auf den wachsenden Anfall von REA-Produkten von Bedeutung ist.

## Verfahren zur Herstellung von Zementklinker und SO₂-haltigen Abgasen

Die Erfindung bezieht sich auf ein Verfahren zur Herstellung von Zementklinker und $SO_2$ haltigen Abgasen aus Schwefel und Kalzium enthaltenden Ausgangsstoffen, wie REA-Produkten, Abfall- und Nebenprodukten wie z.B. Phosphorgips, Anhydrit oder Naturgips.

Die Herstellung von Schwefelsäure aus Gips ist als Müller-Kühne-Verfahren seit langem bekannt (Z. Angewandte Chemie 38, 794-795 (1925); 39, 169-174 (1926); Chem.Ing.Tech. 21 (11/12), 227-229 (1949)). Als Rohstoffe dienen Anhydrit und Naturgips sowie Abfallgips aus chemischen Prozessen. Außerdem werden Koks und Zuschlagstoffe wie Ton, Sand und Eisenoxid benötigt. Das Kalziumsulfat wird in einem Drehrohrofen bei 900 bis 1400°C gespalten. Dabei entstehen $SO_2$-Gas und Zementklinker. Das $SO_2$ wird in einer angeschlossenen Kontaktanlage zu Schwefelsäure verarbeitet (Ullmann 4.Auflage, Band 21, S.51/52).

Das bekannte Verfahren ist mit erheblichen Nachteilen verbunden. Es ist gegenüber anderen Verfahren zur Schwefelsäureherstellung selbst dann nicht konkurrenzfähig, wenn der Klinker zu Portlandzement verarbeitet wird und dadurch ein Teil der hohen Kosten abgedeckt wird. Aus wirtschaftlichen Gründen sind daher schon lange keine entsprechenden Anlagen mehr gebaut worden.

Da bei der wirtschaftlich unverzichtbaren Herstellung von Zementklinker im Drehrohrofen Temperaturen von 1400°C erforderlich sind - obwohl für die reduzierende Spaltung von Kalziumsulfat eine Temperatur oberhalb von 900°C genügt - muß man nicht nur eine vergleichsweise teure Feuerfestausstattung vorsehen, es treten zwangsläufig auch unnötig hohe Wärmeverluste und insbesondere unzulässig hohe Konzentrationen von Stickoxiden im Abgas auf.

Der größte Nachteil bei dem bekannten Verfahren besteht aber darin, daß das Abgas nur einen Anteil von 7 bis 10 Vol.% $SO_2$ enthält. Für die Schwefelsäureherstellung steht also nur ein Gas mit sehr hohem "Ballast-Anteil" zur Verfügung, wodurch die Wirtschaftlihkeit des Verfahrens erheblich beeinträchtigt wird.

Es besteht somit die Aufgabe, ein Verfahren der eingangs genannten Art vorzuschlagen, mit dem diese Nachteile überwunden werden können.

Zur Lösung dieser Aufgabe wird vorgeschlagen, daß bei dem eingangs genannten Verfahren

a) die Ausgangsstoffe mit Zuschlägen gemischt, getrocknet, vorgewärmt und zu einem feinkörnigen Rohmaterial aufbereitet werden,

b) das feinkörnige Rohmaterial in einem aus Wirbelschichtreaktor, Abscheider und Rückführleitung gebildeten Zirkulationssystem unter Zugabe von Brennstoff, Reduktionsmitteln und Verbrennungsluft in reduzierender Atmosphäre bei 900 bis 1100°C behandelt und ein im wesentlichen von Schwefelverbindungen freies, kalziumhaltiges Zwischenprodukt und ein $SO_2$-reiches Abgas erhalten wird,

c) das Zwischenprodukt im Abscheider vom Abgas getrennt und in einem Brennofen unter Zugabe von Brennstoff und Verbrennungsluft zu Zementklinker gebrannt wird und

d) das $SO_2$-reiche Abgas entstaubt, indirekt gekühlt und danach einer Anlage zur Herstellung von Schwefelsäure zugeführt wird.

Das erfindungsgemäße Verfahren unterscheidet sich von dem gattungsbildenden Verfahren in erster Linie dadurch, daß gasseitig eine Aufspaltung vorgenommen wurde, indem für die Spaltung des Kalziumsulfats einerseits und für die Klinkerherstellung andererseits gesonderte Vorrichtungen verwendet werden, wodurch es möglich ist, die jeweiligen Abgase getrennt zu halten und einer getrennten weiteren Verarbeitung bzw. Ausnutzung zuzuführen. Dadurch wird für die Schwefelherstellung ein Abgas gewonnen, das eine wesentlich höhere $SO_2$-Konzentration, nämlich von etwa 20 Vol.%, aufweist und dementsprechend wirtschaftlicher zu verarbeiten ist.

Außerdem weisen die Abgase des Zirkulationssystems praktische keine Stickoxide auf, so daß insoweit eine besondere Reinigung entfällt, was sich ebenfalls wirtschaftlich positiv auswirkt. Das gilt - je nach Wahl des Brennofens - auch für die Klinkerherstellung. Aber selbst wenn dort mit deutlich höheren Temperaturen gearbeitet wird (z.B. Drehrohrofen) bleibt eine Verunreinigung mit Stickoxiden auf einen Teilgasstrom beschränkt, dessen Reinigung dann auch nur einen Teil des Aufwandes erfordert, der für die Reinigung der Abgase insgesamt erforderlich wäre.

Damit ist ein wirtschaftliches Verfahren angegeben, das insbesondere im Hinblick auf die wachsenden Mengen von sogenannten REA-Produkten, also von gipshaltigen Abfällen aus Rauchgasentschwefelungsanlagen, bedeutsam ist. Von den dort anfallenden Mengen ist nur ein Teil ohne besondere Aufarbeitung als Gipsprodukt verwendbar. Außerdem sind die Mengen größer als der Gipsbedarf, so daß für die REA-Produkte zwangsläufig Deponieprobleme entstehen, wenn keine anderweitige Verwendung in Betracht kommt. Mit dem erfindungsgemäßen Verfahren können die wachsenden Mengen gipshaltiger Abfälle aus REA-Anlagen nunmehr wirtschaftlich zu verkaufsfähigen Produkten verarbeitet werden.

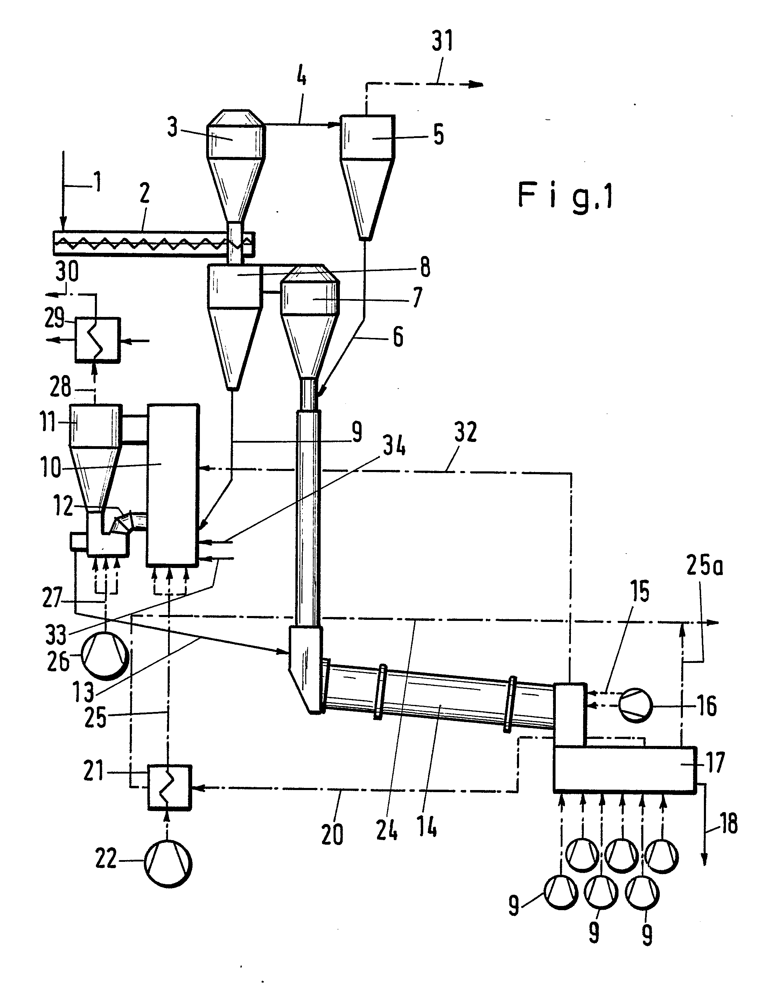

Vorteilhafte Gestaltungen und Varianten des erfindungsgemäßen Verfahrens sind aus den Unteransprüchen 2 bis II ersichtlich. Weitere Einzelheiten und Vorteile werden anhand des in der Figur dargestellten Ausführungsbeispiels näher erläutert:

In dem Schaltbild gemäß Fig.I wird das aufbereitete, feinkörnige Rohmaterial über die Leitung (I) in eine Fördereinrichtung (2) aufgegeben und mittels dieser in den vom Zyklon-Abscheider (8) aufsteigenden Abgasstrom eingespeist. Das Feststoff-Gasgemisch gelangt dann in den Venturi-Trockner (3) und von dort über die Leitung (4) in den Zyklonabscheider (5). Das getrocknete Rohmaterial wird dann über die Leitung (6) in den vom Drehrohrofen (I4) aufsteigenden Abgasstrom eingebracht und in den Venturi-Vorwärmer (7) und weiter in den Zyklon-Abscheider (8) gefördert. Von hier aus gelangt das Rohmaterial über die Leitung (9) in den Wirbelschichtreaktor (I0), während das abgetrennte Abgas zur Trocknung und Förderung des Rohmaterials vom Venturi-Trockner (3) zum Zyklon-Abscheider (5) benutzt wird, wo es wiederum vom Rohmaterial getrennt und über die Leitung (3I) einer Entstaubungseinrichtung und ggf. einer weiteren Wärmeausnutzung zugeführt wird.

Das getrocknete und vorgewärmte Rohmaterial wird im Wirbelschichtreaktor (I0) in reduzierender Atmosphäre auf 900 bis II00°C erhitzt. Über die Leitung (33) wird dazu Brennstoff, über das Gebläse (22), den Vorwärmer (2I) und die Leitung (25) wird Primärluft und über die Leitung (32) Sekundärluft in den Wirbelschichtreaktor (I0) eingegeben. Ferner können über die Leitung (34) noch dosiert Reduktionsmittel zugegeben werden, soweit sie nicht bereits bei der Aufbereitung des Rohmaterials eingebracht wurden.

Der Wirbelschichtreaktor (I0) bildet mit dem Abscheider (II) und der Rückführleitung (I2) ein Zirkulationssystem, in dem das Rohmaterial im Kreislauf geführt wird, wobei durch Abspaltung von $SO_2$ ein von Schwefelverbindungen im wesentlichen freies, kalziumhaltiges Zwischenprodukt entsteht. Das Zwischenprodukt wird über die Leitung (I3) in den Drehrohrofen (I4) eingebracht, während das $SO_2$-reiche Abgas aus dem Abscheider (II) über die Leitung (28) einem Kühler (29) und dann über die Leitung (30) einer Anlage zur Herstellung von Schwefelsäure zugeführt wird. Das $SO_2$-reiche Abgas wird im Kühler (29) indirekt gekühlt, in dem Wärme zur Vorwärmung der Verbrennungsluft für das Zirkulationssystem und/oder zur indirekten Trocknung und Vorwärmung der Ausgangsstoffe und Zuschläge verwendet wird (diese Alternativen sind im Schaltbild nicht dargestellt). In der

Rückführleitung (I2) wird das feinkörnige umlaufende Material durch vom Gebläse (26) über die Leitung (27) eingespeiste Fluidisierungsluft im Schwebezustand gehalten, so daß es leicht vom Abscheider (II) in den Wirbelschichtreaktor (I0) fließen kann.

Der Drehrohrofen (I4) wird über das Gebläse (I6) mit Verbrennungsluft und über die Leitung (I5) mit Brennstoff versorgt. Das kalziumhaltige Zwischenprodukt, das über die Leitung (I3) eingespeist wird, wird im Drehrohrofen (I4) langsam von links nach rechts gefördert und dabei zu Zementklinker gebrannt, der am rechten Ende des Drehrohofens (I4) abgezogen und in den Klinkerkühler (I7) übergeben wird. Er wird hier durch die mittels Gebläsen (9) geförderte Luft gekühlt und über die Leitung (I8) abgezogen.

Die im Klinkerkühler erwärmte Luft wird teils direkt in den Drehrohrofen (I4) abgegeben, teils über die Leitung (20) zum Vorwärmer (2I) geleitet und teils über die Leitung (25a) mit der vom Vorwärmer (2I) über Leitung (24) zurückkommenden Luft gemischt und direkt einer Entstaubungseinrichtung (nicht dargestellt) zugeführt. Ein Teil der Abgase aus dem Drehrohrofen (I4) wird über die Leitung (32) als Sekundärluft in den Wirbelschichtreaktor (I0) eingebracht.

Mit dem erfindungsgemäßen Verfahren können beispielsweise aus 2,9 t Rohmaterial mit etwa folgender Zusammensetzung:

76 % Phosphorgips
I4 % REA-Produkt
7 % Ton und
3 % Quarzsand sowie

noch geringen Mengen an die thermische Spaltung des Kalziumsulfats fördernden Zuschlagstoffen I t Schwefelsäure und I t Zementklinker hergestellt werden. Das Rohmaterial wird mit I bis 20 % Feuchtigkeit aufgegeben. Bei der Verwendung von Steinkohle mit einem unteren Heizwert von rund 27 200 KJ/Kg beträgt der Gesamtwärmeverbrauch etwa 7 322 KJ pro Kg Zementklinker, wobei etwa 40 % des Brennstoffs in den Wirbelschichtreaktor (I0) und ca. 60 % in den Drehrohrofen (I4) aufgegeben werden.

**Ansprüche**

I. Verfahren zur Herstellung von Zementklinker und $SO_2$-haltigen Abgasen aus Schwefel und Kalzium enthaltenden Ausgangsstoffen, wie REA-Produkten, Abfall-und Nebenprodukten wie z.B. Phosphorgips, Anhydrit oder Naturgips, dadurch gekennzeichnet, daß

a) die Ausgangsstoffe mit Zuschlägen gemischt, getrocknet, vorgewärmt und zu einem feinkörnigen Rohmaterial aufbereitet werden,

b) das feinkörnige Rohmaterial in einem aus Wirbelschichtreaktor, Abscheider und Rückführleitung gebildeten Zirkulationssystem unter Zugabe von Brennstoff, Reduktionsmitteln und Verbrennungsluft in reduzierender Atmosphäre bei 900 bis 1100°C behandelt und ein im wesentlichen von Schwefelverbindungen freies, kalziumhaltiges Zwischenprodukt und ein $SO_2$-reiches Abgas erhalten wird,

c) das Zwischenprodukt im Abscheider vom Abgas getrennt und in einem Brennofen unter Zugabe von Brennstoff und Verbrennungsluft zu Zementklinker gebrannt wird und

d) das $SO_2$-reiche Abgas entstaubt, indirekt gekühlt und danach einer Anlage zur Herstellung von Schwefelsäure zugeführt wird.

2. Verfahren nach Anspruch I, dadurch gekennzeichnet, daß das $SO_2$-reiche Abgas zur indirekten Vorwärmung der Verbrennungsluft für das Zirkulationssystem und/oder zur indirekten Trocknung und Vorwärmung der Ausgangsstoffe und Zuschläge verwendet wird.

3. Verfahren nach Anspruch I oder 2, dadurch gekennzeichnet, daß das Abgas des Brennofens zur Trocknung und Vorwärmung des feinkörnigen Rohmaterials verwendet wird.

4. Verfahren nach einem der Ansprüche I bis 3, dadurch gekennzeichnet, daß ein Teil des Brennofen-Abgases dem Wirbelschichtreaktor zugeführt wird.

5. Verfahren nach einem der Ansprüche I bis 4, dadurch gekennzeichnet, daß die gebrannten Zementklinker in einem Klinkerkühler mit Luft gekühlt werden.

6. Verfahren nach einem der Ansprüche I bis 5, dadurch gekennzeichnet, daß ein Teilstrom der Abluft des Klinkerkühlers entstaubt und zur indirekten Vorwärmung der Verbrennungsluft für das Zirkulationssystem verwendet wird.

7. Verfahren nach einem der Ansprüche I bis 6, dadurch gekennzeichnet, daß das feinkörnige Rohmaterial mittels des $SO_2$-reichen Abgases des Zirkulationssystems indirekt und/oder mittels des Brennofenabgases direkt getrocknet und vorgewärmt wird.

8. Verfahren nach einem der Ansprüche I bis 7, dadurch gekennzeichnet, daß die Trocknung und Vorwärmung des feinkörnigen Rohmaterials mittels Brennofenabgas in Venturitrocknern erfolgt, denen gasseitig Zyklonabscheider nachgeschaltet sind.

9. Verfahren nach einem der Ansprüche I bis 8, dadurch gekennzeichnet, daß als Brennofen ein kurzer Drehrohrofen verwendet wird.

10. Verfahren nach einem der Ansprüche I bis 8, dadurch gekennzeichnet, daß als Brennofen ein Wirbelschichtreaktor verwendet wird.

11. Verfahren nach einem der Ansprüche I bis 8, dadurch gekennzeichnet, das als Brennofen ein aus Wirbelschichtreaktor, Abscheider und Rückführleitung gebildetes Zirkulationssystem verwendet wird.

Fig. 1

**Europäisches Patentamt**

**EUROPÄISCHER RECHERCHENBERICHT**

Nummer der Anmeldung

EP 87 20 0794

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 717 489 (G. HERZOG et al.) <br> * Beispiel 1 * | 1,4,10 | C 04 B 7/04 <br> C 01 B 17/50 |
| | --- | | |
| Y | CHEMICAL ABSTRACTS, Band 80, Nr. 16, 22. April 1974, Seite 251, Zusammenfassung Nr. 86895g, Columbus, Ohio, US; & JP-A-73 30 128 (K. AZEGAMI) 18-09-1973 | 1,4,10 | |
| | --- | | |
| A | CHEMICAL ABSTRACTS, Band 92, Nr. 6, Februar 1980, Seite 281, Zusammenfassung Nr. 46431u, Columbus, Ohio, US; I.G. KOSTYL'KOV et al.: "Manufacture of cement clinker and sulfur dioxide", & OTKRYTIYA, IZOBRET., PROM. OBRAZTSY, TOVARNYE ZNAKI 1979, (39), 50 | 1 | |
| | | | **RECHERCHIERTE SACHGEBIETE (Int. Cl.4)** |
| | --- | | |
| A | GB-A- 309 661 (G.J. HARRIS) <br> * Anspruch 1 * | | C 04 B 7/00 <br> C 01 B 17/00 |
| | --- | | |
| A | US-A-2 252 279 (H. ZIRNGIBL et al.) | | |
| | --- -/- | | |

Der vorliegende Recherchenbericht wurde für alle Patentansprüche erstellt.

| Recherchenort | Abschlußdatum der Recherche | Prüfer |
|---|---|---|
| DEN HAAG | 06-10-1987 | DAELEMAN P.C.A. |

**Europäisches Patentamt**

**EUROPÄISCHER RECHERCHENBERICHT**

Nummer der Anmeldung

EP 87 20 0794

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | CHEMICAL ABSTRACTS, Band 84, 1976, Seite 277, Zusammenfassung Nr. 126008m, Columbus, Ohio, US; & DD-A-113 201 (J. KLAUSS et al.) 20-05-1975 | | |
| | ----- | | |

RECHERCHIERTE SACHGEBIETE (Int. Cl.4)

Der vorliegende Recherchenbericht wurde für alle Patentansprüche erstellt.

| Recherchenort | Abschlußdatum der Recherche | Prüfer |
|---|---|---|
| DEN HAAG | 06-10-1987 | DAELEMAN P.C.A. |